# EUROPEAN PATENT APPLICATION

(11) **EP 2 741 154 A2**
(43) Date of publication of application: **11.06.2014**
(21) Application number: 13195062.8
(22) Date of filing: 29.11.2013
(51) Int. Cl.: G05B 15/02, G05B 19/042

(54) **Control system for determining a desired mission**

(30) Priority: 05.12.2012 US 201213705409
(71) Applicant: General Electric Company, Schenectady, New York 12345 (US)
(72) Inventor: Wagoner, Robert Gregory, Salem, VA Virginia 24153-6422 (US); Ritter, Allen Michael, Salem, VA Virginia 24153-6422 (US); Kasliwal, Pritesh, Salem, VA Virginia 24153-6422 (US)
(74) Representative: Picker, Madeline Margaret

(57) **Abstract**

A control system 30 for determining a desired mission is provided. The control system 30 includes an interface 42 for receiving a mission input and a control module 46. The control module 46 is in communication with the interface 42, and determines the desired mission. The desired mission represents a specific conclusion based on analyzing data located in at least one database. The control module 46 includes a transform avatar 66 for determining a proposed transform 120 based on the mission input. The proposed transform 120 is a defined set of rules to determine the desired mission based on the data located in at the least one database. The control module 46 includes a calculation avatar 72 receiving the proposed transform 120. The calculation avatar 72 analyzes the data located in the at least one database based on the proposed transform 120 to determine the desired mission.

## Description

The subject matter disclosed herein relates to a control system, and more specifically to a control system for determining a desired mission.

Recent advances in technology have resulted in the ability to collect and store relatively large amounts of raw data regarding operation of a system. An individual may analyze the raw data regarding operation of the system, and provide a recommendation or conclusion based on the analysis. However, although the individual may have access to a relatively large amount of raw data, it may be relatively difficult, time consuming, and cumbersome for the individual to sort through the raw data before arriving at the conclusion. Moreover, due to the sheer abundance of data, the individual may disregard or waste a portion of the data that could have been used to draw valuable conclusions. Finally, the individual may make mistakes when analyzing the data. These mistakes may affect the conclusion.

According to one aspect of the invention, a control system for determining a desired mission is provided based on avatars. The avatars are programs for analyzing data located in at least one database and determining the desired mission based on analysis of the data located in at least one database. The control system includes an interface for receiving a mission input and a control module. The control module is in communication with the interface, and determines the desired mission. The desired mission represents a specific conclusion based on analyzing data located in at least one database. The control module includes a transform avatar for determining a proposed transform based on the mission input. The proposed transform is a defined set of rules to determine the desired mission based on the data located in at the least one database. The control module includes a calculation avatar receiving the proposed transform. The calculation avatar analyzes the data located in the at least one database based on the proposed transform to determine the desired mission.

According to yet another aspect of the invention, a control system for determining a desired mission based on at least one keyword is provided based on avatars. The avatars are programs for analyzing data located in at least one database and determining the desired mission based on analysis of the data located in at least one database. The control system includes an interface for receiving a mission input and a control module in communication with the interface. The control module determines the desired mission. The desired mission represents a specific conclusion based on analyzing data located in at least one database. The control module includes a transform avatar for determining a proposed transform based on the mission input. The proposed transform is a defined set of rules to determine the desired mission based on the data located in at the least one database. The proposed transform is selected from a library of transforms based on the at least one keyword. The control module includes a calculation avatar receiving the proposed transform. The calculation avatar analyzes the data located in the at least one database based on the proposed transform to determine the desired mission.

According to another aspect of the invention, a method of determining a desired mission is provided based on avatars. The avatars are programs for analyzing data located in at least one database and determining the desired mission based on analysis of the data located in at least one database. The method includes receiving a mission input from an interface. The method includes determining a proposed transform based on the mission input by a transform avatar of a control module. The proposed transform is a defined set of rules to determine the desired mission based on data located in at the least one database. The method includes receiving the proposed transform by a calculation avatar of the control module. The method includes analyzing the data located in the at least one database based on the proposed transform by the calculation avatar. The method includes determining the desired mission by the calculation avatar.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is an exemplary illustration of a wind turbine;
FIG. 2 is a block diagram of a control system for the wind turbine shown in FIG. 1; and
FIG. 3 is a dataflow diagram of a control module shown in FIG. 2.

The detailed description explains embodiments of the invention, together with advantages and features, by way of example with reference to the drawings.

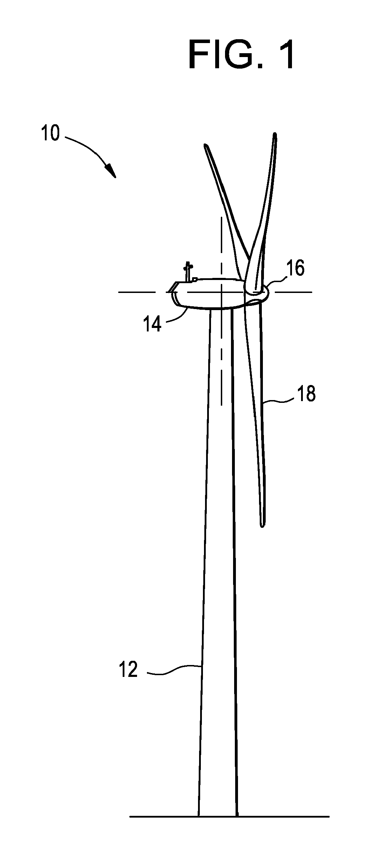

Referring now to FIG. 1, an exemplary wind turbine 10 is illustrated. The wind turbine 10 includes a tower 12, a nacelle 14 that is coupled to the tower 12, a hub 16 that is coupled to the nacelle 14, and at least one blade 18 coupled to the hub 16. The tower 12 provides support for the nacelle 14, the hub 16, and the blade 18. The nacelle 14 houses components (not shown) for use in transforming rotational energy of the blades 18 into electrical energy. The hub 16 provides a rotatable housing for the blades 18. In the exemplary embodiment, three blades 18 are attached to the hub 16, however it is understood any number of blades 18 may be provided as well.

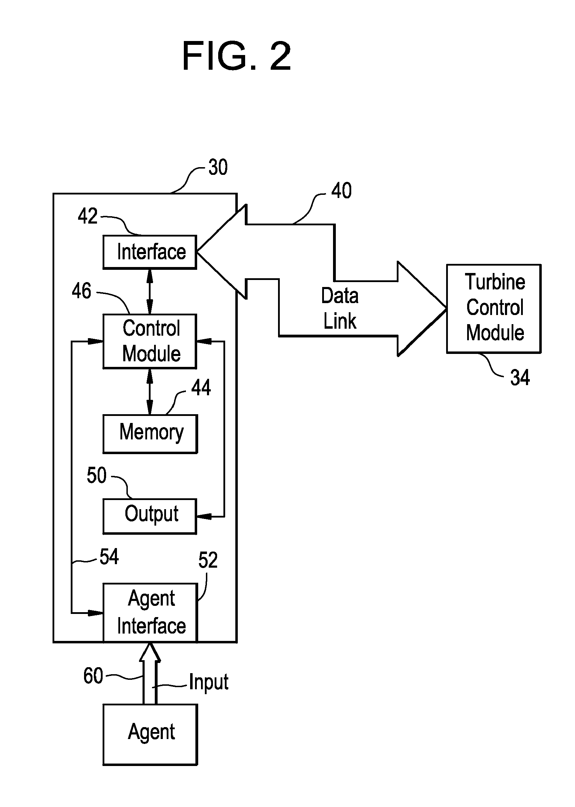

FIG. 2 is an exemplary illustration of a control system 30 that may be used in combination with the wind turbine 10 shown in FIG. 1. The control system 30 is in communication with a turbine control module 34. The turbine control module 34 may operate to control the wind turbine 10 shown in FIG. 1. In one exemplary embodiment, the turbine control module 34 may be located within the tower 12 or the nacelle 14 of the wind turbine 10 (FIG. 1). The turbine control module 34 may control various other control modules within the wind turbine 10 (not shown in FIG. 1), and may also control other wind turbines or a wind farm management system (not shown). The turbine control module 34 may collect information regarding various operating parameters of the wind turbine 10, and may also collect information regarding operating parameters of other wind turbines or a wind farm management system as well.

It should be noted that the embodiment as shown in FIG. 2 is merely one example of the control system 30. That is, the control system 30 may be used in a variety of other applications and is not limited to operation of the wind turbine 10 shown in FIG. 1. For example, the control system 30 may be utilized in applications such as, but not limited to, aviation, transportation (e.g., rail, electric vehicles, automobiles, etc.), medical devices, motor drive applications (e.g., pumps, heating ventilation and cooling (HVAC), elevators, conveyers, etc.), alternative energy applications (e.g., solar, wind, etc.), and power applications (e.g., steam turbines or gas turbines).

The control system 30 is in communication with the turbine control module 34 through a data link 40. The data link 40 may be, for example, a wireless connection (e.g., a wireless Ethernet connection) or a wired connection (e.g., a serial cable). The control system 30 includes an interface 42, a memory 44, at least one control module 46, an output 50, and a user or agent interface 52. The interface 42 is in communication with and receives data regarding operation of the wind turbine 10 (FIG. 1) through the data link 40. The control module 46 is in communication with the interface 42, and receives data regarding operation of the wind turbine 10. The output 50 is in communication with the control module 46. The output 50 may be any device for providing feedback to an agent (e.g., an individual or user). For example, the feedback may be graphic images, and the output 50 may be a screen such as, for example, a liquid crystal display (LCD). In another embodiment, the feedback could be audio sounds, and the output device 50 may be a speaker.

The agent interface 52 is any device capable of receiving user generated input 60 from a user or an agent (e.g., an operator of the wind turbine 10 shown in FIG. 1), and sending a control signals 54 to the control module 46 indicative of the input 60. For example, in one embodiment, the agent interface 52 may be a microphone and the user input 60 may be a human voice. In another approach, the user interface 52 may be a keypad or touchscreen, and the user input 60 may be tactile feedback (e.g., the user pushes buttons on the keypad). In yet another approach, the user interface 52 may be a tracking device for tracking movement on a human (e.g., a device detecting hand or eye movement), and the user input 60 may be movement generated by a human.

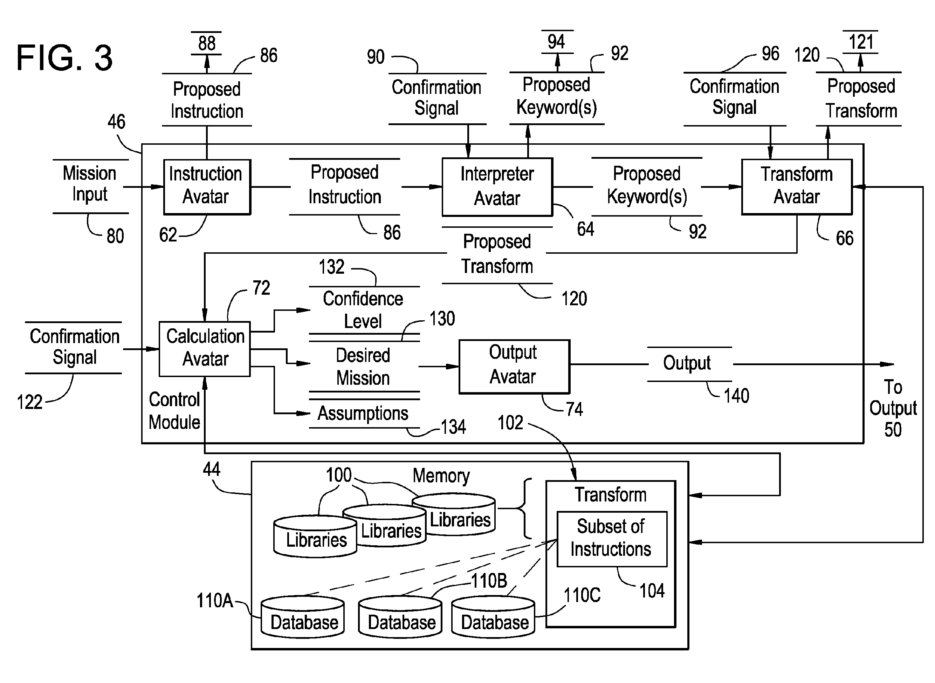

FIG. 3 is a dataflow diagram of the control module 46 shown in FIG. 2 illustrates an exemplary embodiment of the control module 46 of FIG. 2. As used herein the terms module and sub-module refer to an application specific integrated circuit (ASIC), an electronic circuit, a processor (shared, dedicated, or group) and memory that executes one or more software or firmware programs, or a combinational logic circuit. In the embodiment as shown, the control model 46 includes a number of sub-modules or avatars. An avatar is an algorithm or program executed by the control module 46 for analyzing data, and determining a conclusion based on the data analysis. In one embodiment, the avatar may use artificial intelligence techniques to analyze data and draw conclusions more efficiently over time. In the exemplary embodiment as shown in FIG. 3, the control module 46 includes an instruction avatar 62, an interpreter avatar 64, a transform avatar 66, a calculation avatar 72, and an output avatar 74. It should be noted that the avatars illustrated in FIG. 3 are exemplary, and more or less avatars may be included within the control module 46 as well.

The instruction avatar 62 receives as input a mission input 80 from the user interface 52 (FIG. 2). Specifically, an agent may generate the mission input 80 that is received by the interface 52 (FIG. 2) indicating a selected or desired mission. The desired mission represents a specific conclusion that the control module 46 determines based on analyzing data. For example, in one embodiment, the desired mission may be the product life of the wind turbine 10 (FIG. 1), and an agent may generate a voice command (e.g., an agent may say "I want to know the product life of this wind turbine") that represents the desired mission. The instruction avatar 62 generates a proposed instruction 86 based on the mission input 80. The proposed instruction 86 is a representation of the mission input 80 created by the agent.

The proposed instruction 86 may be converted into a control signal 88 that is sent to the agent interface 52 (FIG. 2). The control signal 88 may be a graphical signal, an audio signal, or any type of signal that generates an indication of the proposed instruction 86 on the output 50 (e.g., a graphic that displays text "would you like to know the product life of the wind turbine?" may be generated on a display). An agent may then confirm that the proposed instruction 86 is an accurate indication of the desired mission. Specifically, the agent may confirm the proposed instruction 86 by entering input 60 into the agent interface 52 (FIG. 2). The agent interface 52 may then generate a confirmation signal 90 indicating the agent has confirmed the proposed instruction 86.

The interpreter avatar 64 receives as input the confirmation signal 90 from the agent interface 52 (FIG. 2), as well as the proposed instruction 86 from the keyword avatar 62. The interpreter avatar 64 may then propose a keyword or set of keywords 92 that capture or describe the desired mission based on the proposed instruction 86. For example, the interpreter avatar 64 would determine the keywords "product life" and "wind turbine" based on the proposed instruction 86 of "would you like to know the product life of the wind turbine?".

The keyword or set of keywords 92 may be converted into a control signal 94 sent to the agent interface 52 (FIG. 2). An agent may then confirm that the keyword or set of keywords 92 accurately represents the desired mission. Specifically, the agent may confirm the proposed keyword or set of keywords 92 by entering input 60 into the agent interface 52 (FIG. 2). The agent interface 52 may then generate a confirmation signal 96 indicating the agent has confirmed the keyword or set of keywords 92.

The transform avatar 66 receives as input the confirmation signal 96 from the agent interface 52 (FIG. 2), as well as the proposed keyword or set of keywords 92 from the interpreter avatar 64. The transform avatar 66 is in communication with the memory 44 of the control system 30 (FIG. 2). The memory 44 stores one or more libraries 100. Each library 100 contains at least one transform 102. Each transform in the library 100 may be associated with at least one unique keyword. The transform 102 is generally defined as a rigid or defined set of rules or procedures for analyzing data based on a specific question or issue to be solved. Specifically, the transform 102 is a defined set of rules for managing and analyzing data to determine the desired mission based on the keyword or set of keywords 92.

Each transform 102 in the library 100 may include a subset of instructions 104. The subset of instructions 104 are generally defined as a known or predefined set of rules or procedures used to analyze data based on the proposed keyword or set of keywords 92. The subset of instructions 104 may include, for example, design practices or statistical reductions for determining the desired mission based on the keyword or set of keywords 92. The subset of instructions 104 may also be associated with at least one database. In the embodiment as shown in FIG. 3, three databases 110A-110C are shown, where data located in the databases 110A-110C may be analyzed based on the subset of instructions 104 to determine the proposed mission.

The databases 110A-110C may include, for example, industry standard data, operation data (i.e., data collected by the turbine control module 34 shown in FIG. 2 regarding operation of the wind turbine 10), and/or historical data. Industry standard data is generally defined as data that is commonly used in industry for controls and stress measures. Some examples of industry standard data include, but are not limited to, voltage, current, failure rate, and mission confidence. In another embodiment, industry standard data may include various drug interactions if the control system 30 is used in a medical application for treatment of a patient. Historical data is generally defined as data that is saved or stored during operation of automated machinery. Some examples of historical data include, but are not limited to, temperature, voltage, power, or patient weight (if the control system 30 is used in a medical application). The databases 110A-110C may also include data regarding operation or control of the wind turbine 10 shown in FIG. 1 as well information regarding operation of other wind turbines or a wind farm management system (not shown).

Once the transform avatar 66 receives the confirmation signal 96 indicating the proposed keyword or set of keywords 92 accurately represents the desired mission, the transform avatar 66 may select a proposed transform 120 from the libraries 100 based on the proposed keyword or set of keywords 92. Specifically, each transform 102 is associated with a specific keyword or set of keywords 92, and is specifically configured to determine the desired mission described by the proposed keyword or set of keywords 92. For example, if keywords are "product life" and "wind turbine," then the desired mission may be to determine the product life of the wind turbine 10 (FIG. 1). The transform avatar 66 may select the proposed transform 120 from the library 100, where the proposed transform 120 is specifically configured to analyze the product life of the wind turbine 10 based on analyzing the databases 110A-110C. The transform avatar 66 may generate as output the proposed transform 120.

The proposed transform 120 may be converted into a control signal 121 sent to the agent interface 52 (FIG. 2). The control signal 121 is sent to the agent interface 52 (FIG. 2). An agent may then confirm that the proposed transform 120 will accurately analyze the desired mission. Specifically, the agent may confirm the proposed transform 120 by entering input 60 into the agent interface 52 (FIG. 2). The agent interface 52 may then generate a confirmation signal 122 indicating the agent has confirmed the proposed transform 120.

The calculation avatar 72 initially receives as input the proposed transform 120 from the transform avatar 66. The calculation avatar 72 also receives as input the confirmation signal 122 from the agent interface 52 (FIG. 2). Upon receipt of the confirmation signal 122 from the agent interface 52, the calculation avatar 72 may then determine the desired mission based on the proposed transform 120. The calculation avatar 72 is in communication with the memory 44. The calculation avatar 72 may retrieve from the memory 44 the subset of instructions 104 and the databases 110A-110C associated with the proposed transform 120. The calculation avatar 72 may then analyze the data in the databases 110A-110C according to the subset of instructions 104 to determine a calculated desired mission 130. The calculated desired mission signal 130 represents the desired mission determined by calculation avatar 72.

In one approach, the calculated desired mission 130 may be expressed in a range, along with a confidence level 132 of the calculated desired mission 130. The confidence level 132 may be expressed as a percentage. For example, in one illustrative example, the calculated desired mission 130 is the product life of the wind turbine 10 shown in FIG. 1 (e.g., the product life is between 9-12 years) and the confidence level 132 of the product life is about 90%. In one embodiment, a list of assumptions or variables 134 used to determine the calculated desired mission 130 may also be included with the desired mission. Some examples of the assumptions 134 include, for example, ambient operating conditions, equipment service rate, a rescoped mission, and a treatment or change of treatment for a patient in a medical application (e.g., drugs prescribed, etc.).

The output avatar 74 receives as input the calculated desired mission 130, the confidence level 132, and the assumptions 134, and generates an output signal 140 that is sent to the output 50 shown in FIG. 2. The output signal 140 is configured to generate an indication of the desired mission, the confidence level, and the list of assumptions on the output 50. For example, the output 50 may be a display, and the output signal 140 generates a message on the display reading "the product life of the wind turbine is between 9-12 years with a confidence level of 90%" as well as the assumptions used to determine the desired mission.

Based on the message generated by the output signal 140, an agent may decide to execute another simulation. For example, if the goal mission is to achieve a product life of at least fifteen years, then another simulation may be executed. Specifically, an agent may modify or change one or more operating parameters used to determine the calculated desired mission 130 in order to achieve the goal mission. For example, an agent wants to increase the product life of the wind turbine 10 (FIG. 1) to fifteen years, then the agent may modify or instruct the transform 102 to use a different database or databases to determine the desired mission. In one embodiment, if the agent decides to increase the product life of the wind turbine 10 (FIG. 1), the agent may instruct the transform 102 to switch databases (e.g., from database 110A to database 110B). The database 110A may represent data with the current nacelle 14, the current hub 16, and the current blade 18 (FIG. 1), and database 110B may represent data with the nacelle 14, the hub 16, and the blade 18 being replaced with new componentry.

Technical effects and benefits include providing the control system 30 that determines a desired mission using an automated approach, and substantially eliminates the need for an agent to analyze relatively large databases. Specifically, the control module 46 of the control system 30 receives as input the desired mission determined by an agent, and determines the desired mission using the automated approach as described above. It may be relatively difficult, time consuming, and cumbersome for an agent to sort through a vast amount of data that may be stored in the databases 110A-110C. Moreover, an agent may disregard or waste a portion of the data that could have been used to determine the desired mission. In contrast, the control system 30 may provide a relatively quick and cost-effective alternative to determining various missions with enhanced accuracy. Additionally, the control system 30 as shown in FIG. 2 provides an interface to provide feedback to an agent. Thus, the agent may confirm various calculations performed by the control system 30 (e.g., the proposed instruction 86, the proposed keyword 92, and the proposed transform 120). Thus, an agent may still be able to supervise or aid in determining the desired mission.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A control system for determining a desired mission based on avatars, the avatars being programs for analyzing data located in at least one database and determining the desired mission based on analysis of the data located in at least one database, the control system comprising:
   an interface for receiving a mission input indicative of the desired mission; and
   a control module in communication with the interface, the control module determining the desired mission, the desired mission representing a specific conclusion based on analyzing the data located in the at least one database, the control module including:
      a transform avatar for determining a proposed transform based on the mission input, the proposed transform being a defined set of rules to determine the desired mission based on the data located in at the least one database; and
      a calculation avatar receiving the proposed transform, and analyzing the data located in the at least one database based on the proposed transform to determine the desired mission.
2. The control system of clause 1, wherein the proposed transform is selected from a library of transforms, and wherein selection of the proposed transform from the library of transforms is based on at least one keyword.
3. The control system of any preceding clause, wherein the proposed transform includes a subset of instructions, wherein the subset of instructions are a known set of procedures for analyzing the data located in the at least one database based on the at least one keyword.
4. The control system of any preceding clause, comprising an instruction avatar, wherein the instruction avatar receives the mission input, and wherein the instruction avatar determines a proposed instruction based on the mission input.
5. The control system of any preceding clause, comprising an interpreter avatar that receives the proposed instruction, and determines at least one keyword based on the proposed instruction.
6. The control system of any preceding clause, wherein the calculation avatar determines a confidence level of the desired mission and a list of assumptions used to determine the desired mission.
7. The control system of any preceding clause, comprising an output avatar and an output device, wherein the output avatar receives the desired mission from the calculation avatar, and wherein the output avatar sends the desired mission to the output device.
8. The control system of any preceding clause, wherein the data in the at least one database includes at least one of the following: industry standard data, operation data, and historical data.
9. A control system for determining a desired mission based on at least one keyword based on avatars, the avatars being programs for analyzing data located in at least one database and determining the desired mission based on analysis of the data located in at least one database, the control system comprising:
   an interface for receiving a mission input indicative of the desired mission; and
   a control module in communication with the interface, the control module determining the desired mission, the desired mission representing a specific conclusion based on analyzing the data located in the at least one database, the control module including:
      a transform avatar for determining a proposed transform based on the mission input, the proposed transform being a defined set of rules to determine the desired mission based on the data located in at the least one database, the proposed transform being selected from a library of transforms based on the at least one keyword; and
      a calculation avatar receiving the proposed transform, and analyzing the data located in the at least one database based on the proposed transform to determine the desired mission.
10. The control system of any preceding clause, wherein the proposed transform includes a subset of instructions, wherein the subset of instructions are a known set of procedures for analyzing the data located in the at least one database based on the at least one keyword.
11. The control system of any preceding clause, comprising an instruction avatar, wherein the instruction avatar receives the mission input, and wherein the instruction avatar determines a proposed instruction based on the mission input.
12. The control system of any preceding clause, comprising an interpreter avatar that receives the proposed instruction, and determines the at least one keyword based on the proposed instruction.
13. The control system of any preceding clause, wherein the calculation avatar determines a confidence level of the desired mission and a list of assumptions used to determine the desired mission.
14. The control system of any preceding clause, comprising an output avatar an output device, wherein the output avatar receives the desired mission from the calculation avatar, and wherein the output avatar sends the desired mission to the output device.
15. The control system of any preceding clause, wherein the data in the at least one database includes at least one of the following: industry standard data, operation data, and historical data.
16. A method of determining a desired mission based on avatars, the avatars being programs for analyzing data located in at least one database and determining the desired mission based on analysis of the data located in at least one database, comprising:
   receiving a mission input from an interface indicative of the desired mission;
   determining a proposed transform based on the mission input by a transform avatar of a control module, the proposed transform being a defined set of rules to determine the desired mission based on the data located in the at least one database;
   receiving the proposed transform by a calculation avatar of the control module;
   analyzing the data located in the at least one database based on the proposed transform by the calculation avatar; and
   determining the desired mission by the calculation avatar.
17. The method of any preceding clause, comprising selecting the proposed transform from a library of transforms, wherein selection of the proposed transform from the library of transforms is based on at least one keyword.
18. The method of any preceding clause, wherein the proposed transform includes a subset of instructions, wherein the subset of instructions are a known set of procedures for analyzing the data located in the at least one database based on the at least one keyword.
19. The method of any preceding clause, comprising providing an instruction avatar, wherein the instruction avatar receives the mission input, and wherein the instruction avatar determines a proposed instruction based on the mission input.
20. The method of any preceding clause, comprising providing an interpreter avatar that receives the proposed instruction and determines at least one keyword based on the proposed instruction.

## Claims

1. A control system (30) for determining a desired mission based on avatars, the avatars being programs for analyzing data located in at least one database and determining the desired mission based on analysis of the data located in at least one database, the control system (30) comprising:
an interface (42) for receiving a mission input indicative of the desired mission; and
a control module (46) in communication with the interface (42), the control module (46) determining the desired mission, the desired mission representing a specific conclusion based on analyzing the data located in the at least one database, the control module (46) including:
a transform avatar (66) for determining a proposed transform (120) based on the mission input, the proposed transform (120) being a defined set of rules to determine the desired mission based on the data located in at the least one database; and
a calculation avatar (72) receiving the proposed transform (120), and analyzing the data located in the at least one database based on the proposed transform to determine the desired mission.

2. The control system of claim 1, wherein the proposed transform (120) is selected from a library (100) of transforms (102), and wherein selection of the proposed transform from the library of transforms is based on at least one keyword (92).

3. The control system of claim 2, wherein the proposed transform (120) includes a subset of instructions (104), wherein the subset of instructions (104) are a known set of procedures for analyzing the data located in the at least one database based on the at least one keyword (92).

4. The control system of claim 1, 2 or 3, comprising an instruction avatar (62), wherein the instruction avatar (62) receives the mission input, and wherein the instruction avatar determines a proposed instruction based on the mission input.

5. The control system of claim 4, comprising an interpreter avatar (64) that receives the proposed instruction, and determines at least one keyword (92) based on the proposed instruction.

6. The control system of any preceding claim, wherein the calculation avatar (72) determines a confidence level of the desired mission and a list of assumptions used to determine the desired mission.

7. The control system of any preceding claim, comprising an output avatar (74) and an output device, wherein the output avatar (74) receives the desired mission from the calculation avatar (72), and wherein the output avatar (74) sends the desired mission to the output device.

8. The control system of any preceding claim, wherein the data in the at least one database includes at least one of the following: industry standard data, operation data, and historical data.

9. The control system of any preceding claim, the control system (30) for determining a desired mission based on at least one keyword (92) based on avatars, wherein:
the transform avatar (66) for determining a proposed transform based on the mission input selects the proposed transform from a library (100) of transforms (102) based on the at least one keyword (92).

10. The control system of claim 9, comprising an interpreter avatar (54) that receives the proposed instruction, and determines the at least one keyword (92) based on the proposed instruction.

11. A method of determining a desired mission based on avatars, the avatars being programs for analyzing data located in at least one database and determining the desired mission based on analysis of the data located in at least one database, comprising:
receiving a mission input from an interface indicative of the desired mission;
determining a proposed transform (120) based on the mission input by a transform avatar (66) of a control module (46), the proposed transform (120) being a defined set of rules to determine the desired mission based on the data located in the at least one database;
receiving the proposed transform (120) by a calculation avatar (72) of the control module (46);
analyzing the data located in the at least one database based on the proposed transform (120) by the calculation avatar (72); and
determining the desired mission by the calculation avatar (72).

12. The method of claim 11, comprising selecting the proposed transform (120) from a library (100) of transforms (102), wherein selection of the proposed transform from the library of transforms is based on at least one keyword (92).

13. The method of claim 12, wherein the proposed transform (120) includes a subset of instructions (104), wherein the subset of instructions (104) are a known set of procedures for analyzing the data located in the at least one database based on the at least one keyword (92).

14. The method of claim 11, 12 or 13, comprising providing an instruction avatar (52), wherein the instruction avatar (62) receives the mission input, and wherein the instruction avatar (62) determines a proposed instruction based on the mission input.

15. The method of any one of claim 11 to 14, comprising providing an interpreter avatar (54) that receives the proposed instruction and determines at least one keyword (92) based on the proposed instruction.
